# EUROPEAN PATENT SPECIFICATION

(11) **EP 4 092 212 B1**
(45) Date of publication and mention of the grant of the patent: **06.09.2023**
(21) Application number: 22174380.0
(22) Date of filing: 19.05.2022
(51) Int. Cl.: E04B 2/82, F16B 7/18, E04B 2/76, E04B 2/74, F16B 5/06, F16B 7/04, F16B 21/02, E04B 1/24, E04B 1/58, F16B 7/22

(54) **INSTALLATION SYSTEM FOR PARTITION PANELS IN A ROOM**
INSTALLATIONSSYSTEM FÜR TRENNWÄNDE IN EINEM RAUM
SYSTÈME D'INSTALLATION DE PANNEAUX DE SÉPARATION DANS UNE PIÈCE

(30) Priority: 21.05.2021 IT 202100013241
(43) Date of publication of application: 23.11.2022
(73) Proprietor: Dresswall S.r.l., 22063 Cantu' (CO) (IT)
(72) Inventor: MASCHERONI, Luca, I-22060 Carimate (CO) (IT); ZOIA, Silvia, I-22060 Carimate (CO) (IT)
(74) Representative: De Gregori, Antonella

(56) References cited:
- EP-A1- 2 905 393
- EP-A2- 2 434 068
- DE-A1-102014 006 620
- KR-U- 20200 002 086
- US-A1- 2017 067 498

## Description

The present invention relates to an installation system for partition panels in a room. The term "partition panel" refers to staves, profiles, wall elements, etc. that can be used in an environment for the creation of a subdivision of the environment itself into spaces intended for the most diverse uses.

There is a need for being able to divide an environment into spaces on specific request with structures that can be possibly removed, even at least partially, so as to be able to intervene to vary the form, width and type of spaces thus created and defined.

This requirement has been solved with the introduction of dividing systems with staves or panels that can be positioned between the floor and the ceiling for creating the required spaces in a simple way and that can at the same time be rapidly installed, while retaining a certain aesthetic appearance of the final environment thus created.

These systems also require the possibility of intervening simply and rapidly to remove staves or partial wall elements so as to vary the space defined for the most varied occupancy or habitability requirements of the space.

An example of such known systems is shown in EP2905393A1 disclosing an installation system for partition elements in an environment according to the preamble of claim 1.

DE 102014006620A1 shows a connection system for male-female elements capable of making a rapid structural connection.

An important problem in this type of system is the installation of structural elements suitable for positioning and supporting the partition panels, as defined above, even in the presence of supporting surfaces that are not perfectly flat and level. The ceiling or the floor, for example, may not in fact be perfectly uniform and flat and in any case such that the structural elements that must be attached to them are difficult to position correctly.

The problem at the basis of the present invention is therefore that of creating an installation system for partition panels in a room that is capable of overcoming the limitations of the state of the art in a simple, reliable and economical way.

Within the context of this problem, an objective of the present invention is to provide an installation system that is capable of overcoming the problems of the non-presence of levelling and horizontal plane of the floor or ceiling.

In particular, a further objective of the present invention is to provide an installation system for partition panels in a room in the presence of a non-level floor and/or ceiling, making everything extremely simple and immediate.

A further objective of the present invention is to provide an installation system for partition panels in a room in the presence of a non-level floor and/or ceiling, which in any case also allows the simple and immediate removal of the single partition panel forming the area or partition wall.

The invention is defined by the features of claim 1.

Further characteristics and advantages of the present invention will become more evident from the following detailed description of some of its preferred embodiments, made with reference to the attached drawings.

The different characteristics in the individual configurations can be combined with each other as desired according to the previous description, should advantage be taken of the benefits resulting specifically from a particular combination.

In said drawings,
- figure 1 is a perspective view of a system according to the present invention in an operational configuration of parts exploded together;
- figure 2 is a raised sectional view of the system of figure 1;
- figure 3 is an exploded raised sectional side view showing a telescopic group being assembled;
- figures 4 and 4a are raised sectional side views in different positions when the telescopic group is assembled and adjusted from a lowered to a raised position;
- figures 5 to 6 show exploded and assembled perspective views of a partition panel forming part of the system of the invention;
- figures 7 and 8 show enlarged exploded perspective views of elements of the two female coupling elements with a male coupling element which form coupling-uncoupling groups;

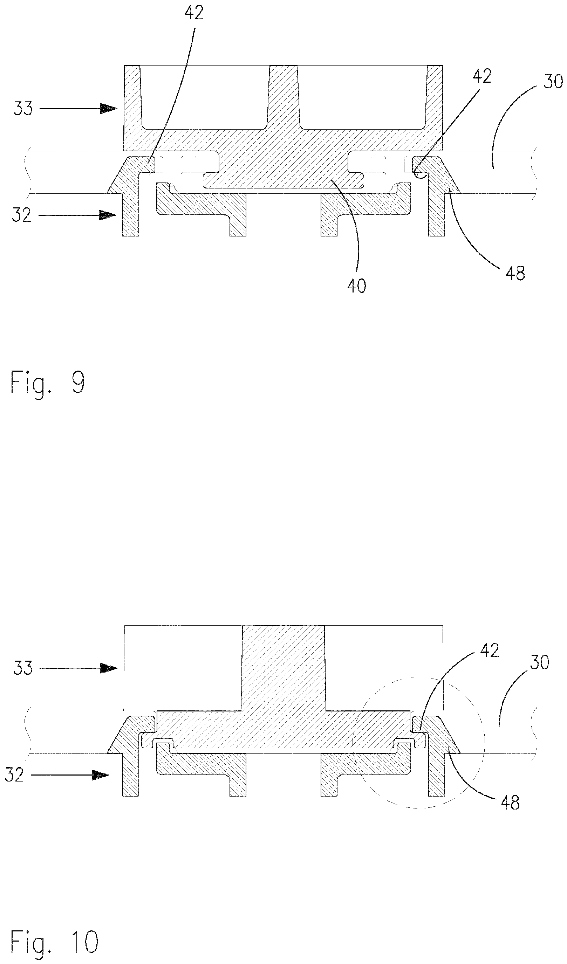

- figures 9 and 10 show enlarged sections of a coupling-uncoupling group in its two operating positions for insertion and coupling;
- figures 11 to 14 show in four consecutive steps how the assembly of a system according to the invention is effected.

In the following description, for the illustration of the figures, identical reference numbers are used for indicating construction elements having the same function. Furthermore, for clarity of illustration, some numerical references may not have been repeated in all of the figures.

Indications such as "vertical" and "horizontal", "upper" and "lower" (in the absence of other indications) should be read with reference to the assembly (or operating) conditions and referring to the normal terminology used in current language, wherein "vertical" indicates a direction substantially parallel to that of the force of gravity vector "g" and a horizontal direction perpendicular to it.

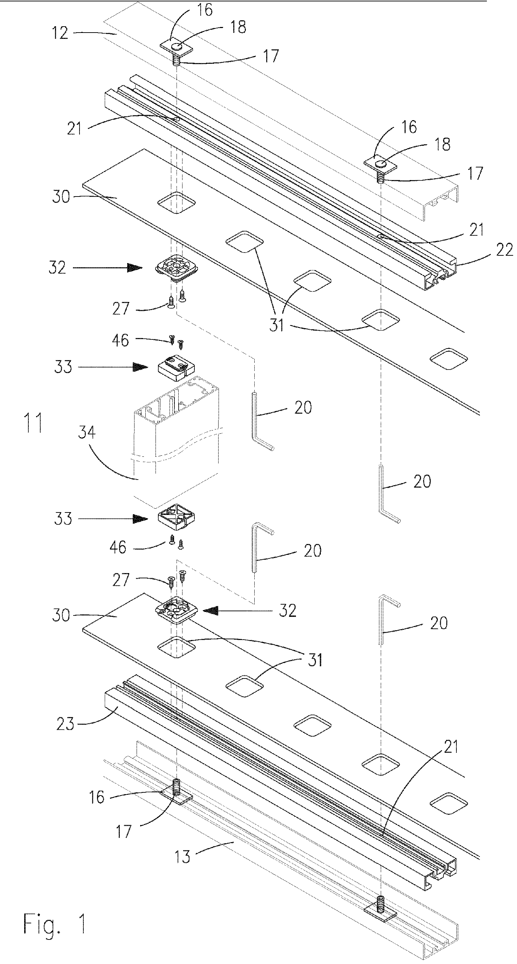

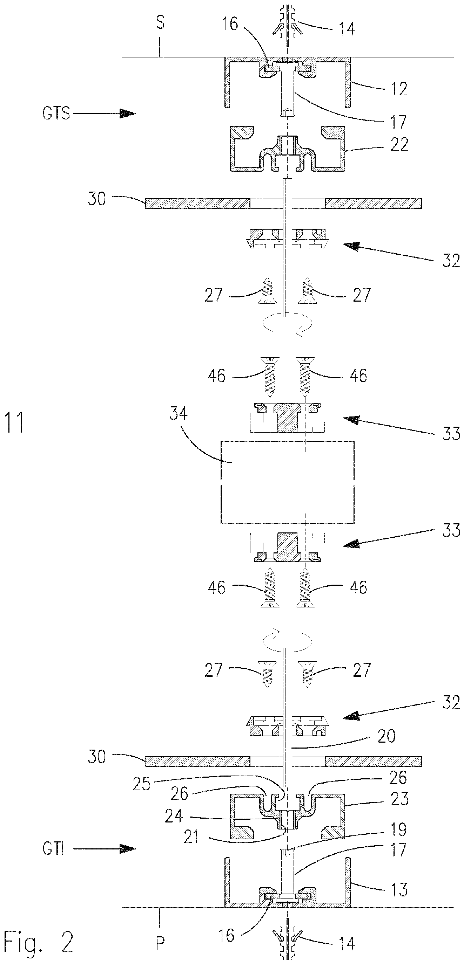

With reference to figures 1 and 2, these show an embodiment of an installation system for partition panels in a room according to the present invention, indicated as a whole with 11.

This system is suitable for being arranged in an environment fixed at one end to a ceiling S and at the other end to a floor P. More specifically, there is the provision that these ends be composed of upper telescopic groups GTS and lower telescopic groups GTI produced with profiles that are fixed to the ceiling S and to the floor P and allow, according to the present invention, their adjustment with respect to the plane of the ceiling S or the plane of the floor P, in order to be able to arrange wall elements to be installed by means of the system of the present invention, level and correctly oriented.

Each telescopic group GTS, GTI comprises a first section 12, 13, for example in extruded aluminum, which has a U-shaped section. The first section 12 is constrained to the ceiling S and the first section 13 is constrained to the floor P by means of expansion dowels 14, respectively.

The first sections 12, 13, which, as already indicated, have a U-shaped section, in a central portion that connects the two sides of the U, within the section, have and carry a longitudinal shaped housing 15 with curved ends suitable for slidingly receiving plates 16 in its interior. These plates 16 carry and axially constrain, free to rotate, threaded pins 17 provided with heads 18 which protrude perpendicular to each plate 16. These threaded pins 17 are internally provided with a blind hole 19 and shaped, for example hexagonal, for receiving an Allen key 20 which allows them to rotate in screwing and/or unscrewing with respect to threaded holes 21, whose positioning is described further on.

A second section 22, 23 is internally and slidingly coupled with the first section 12, 13, to form the telescopic assembly, and this too substantially has a U-shaped section. More specifically, this second section 22, 23 also has a central shaped portion consisting of a solid central section 24 and a longitudinal shaped housing 25 with curved ends suitable for allowing the free passage of the threaded pins 17 and/or of the Allen key 20 in pass-through threaded holes 21. On opposite sides with respect to said shaped housing 25, the second section has longitudinal seats 26 for fixing screws 27.

The first section 12, 13 and the second section 22, 23 can be respectively inserted, the second in the first so as to create the above-mentioned telescopic coupling group GTS, GTI and can be adjustably moved between each other so as to be arranged at a reciprocal distance as desired, to allow the adjustment in position with respect to the ceiling S and/or to the floor P respectively of the room in which the system of the present invention must be constrained.

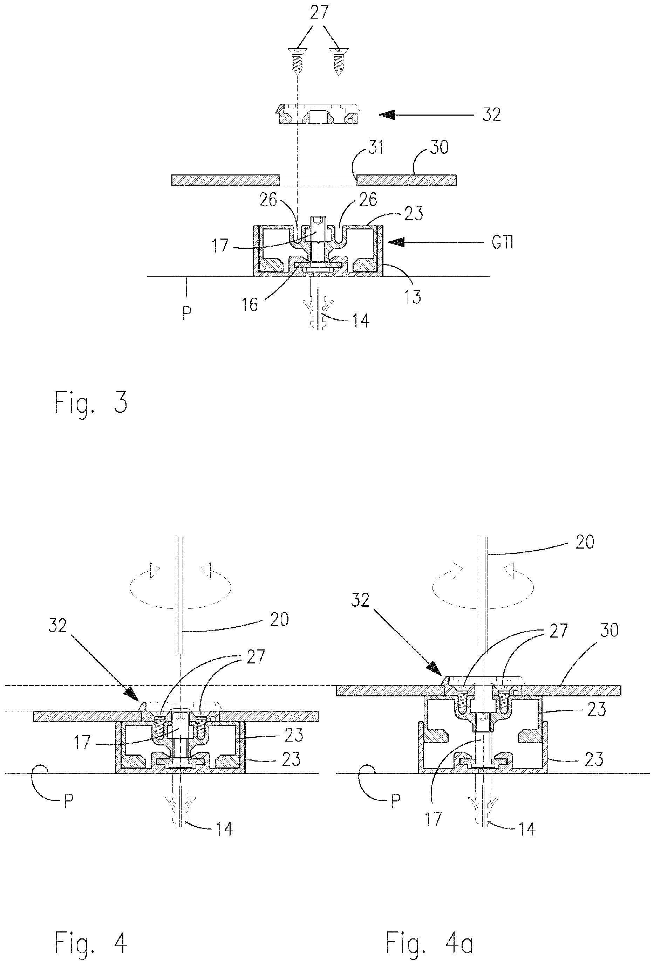

Figures 4 and 4a show the telescopic group in a raised sectional side view in two different positions when, once assembled, it is adjusted from a lowered to a raised position with the Allen key 20 which rotates the threaded pin 17, inserted in the threaded hole 21. This causes the movement of the second section 23 with respect to the first section 13 to reach the required position in height of the second section 23 with respect to the first section 13, which remains fixed to the floor P.

The same considerations made for the telescopic coupling group GTI should also be applied for the group GTS which has the possibility of having the adjustment in position between the first fixed section 12 and the second section 22 movable and adjustable in position with respect to the first section 12.

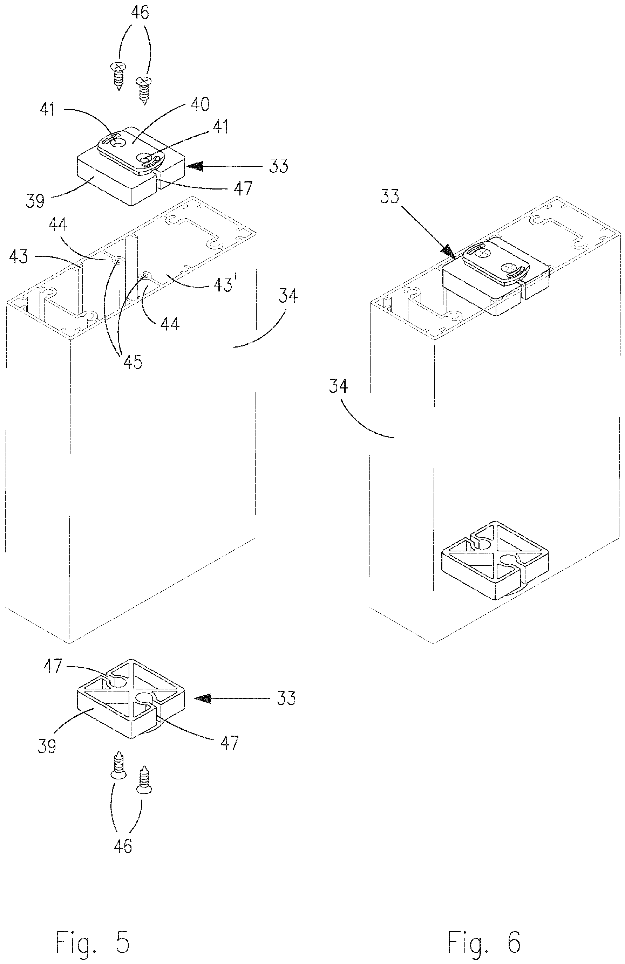

An "aesthetic" covering plate 30 is positioned above the telescopic coupling groups GTS, GTI and provides a series of pass-through openings 31 which each allow the passage of a first female coupling element 32 (figures 3 and 4, 4a) for a respective second male coupling element 33 connected to a partition panel or stave 34 (figures 5 and 6). As previously indicated, the term "partition panel" refers to staves, profiles, wall elements, etc. that can be used in an environment for the creation of a subdivision of the environment itself into spaces intended for the most diverse uses.

Each first female coupling element 32 with a respective second male coupling element 33 form a coupling-uncoupling group and these groups are arranged for each partition panel or stave 34 to be positioned.

Each coupling-uncoupling group comprises a first female coupling element 32 and a second male coupling element 33, one connected to said second section 22, 23 and the other to said partition panel 34 which can be engaged in rotation by releasable constraint means which are described hereunder.

The first female coupling element 32 is in fact fixed by means of the fixing screws 27 within the seats 26 of the second section 22, 23 forming part of the respective telescopic coupling group GTS, GTI.

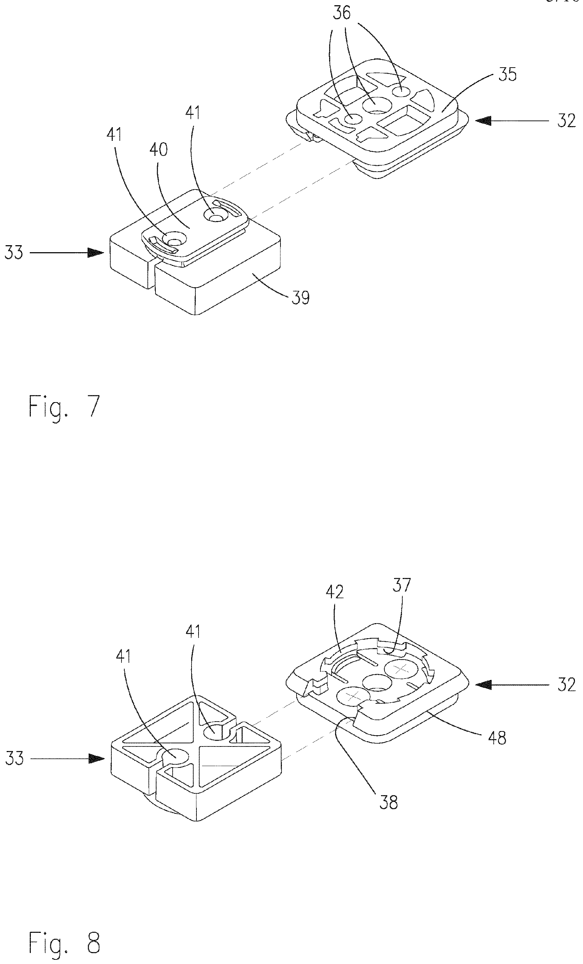

In the example shown, the first female coupling element 32 comprises a plate structure 35 whose base has three aligned pass-through holes 36 and a recessed circular housing 37, with a peripheral opening 38 for allowing access to the housing 37 (figures 7 and 8 ). In addition, a peripheral edge 48 is also provided which protrudes outwardly and abuts against the opening 31 formed in the covering plate 30.

The second male coupling element 33 comprises a plate structure 39 from which a flat elongated rectangular T-shaped extension 40 protrudes, provided with two fixing holes 41.

The flat T-shaped extension 40 is such and suitable for passing from the peripheral access opening 38 to the housing 37 by its shorter side so as to enter the same and, by rotation, position itself blocked in its interior with its longer side beneath a perimetric edge 42 protruding inwardly, causing the blockage by rotation between the two parts or two female 32 and male 33 coupling elements. In this way a coupling-uncoupling group is created between two parts, in this case between a telescopic group GTS, GTI and a partition panel 34.

It should be noted that according to the present invention the second male coupling element 33 is inserted in a pair of seats 43, 43' of one end of a partition panel or stave 34. In particular in the example shown, a partition panel or stave 34 is produced with an aluminum extruded element at whose ends the two seats 43, 43', etc. are defined. In an intermediate area between these seats 43, 43', two flaps 44 are provided with holes 45 for fixing screws 46 at the ends. The second male coupling element 33 in its plate structure 39 has two recesses 47 suitable for being wedge-inserted on the flaps 44 provided between the seats 43, 43' of the partition panel or stave 34. Once this insertion has been effected, the second male coupling element 33 is stably fixed to the partition panel or stave 34 by screwing the fixing screws 46 into the two holes 41 and then further into the holes 45 of the flaps 44 present in the partition panel or stave 34.

These constraining operations of the second male coupling element 33 are carried out on both opposite longitudinal sides of the partition panel or stave 34. And it has been seen that an "aesthetic" covering plate 30 provided with a series of openings 31 each bearing a respective first female coupling element 32 has been previously positioned at each of the telescopic groups GTS, GTI fixed to the ceiling S and to the floor P.

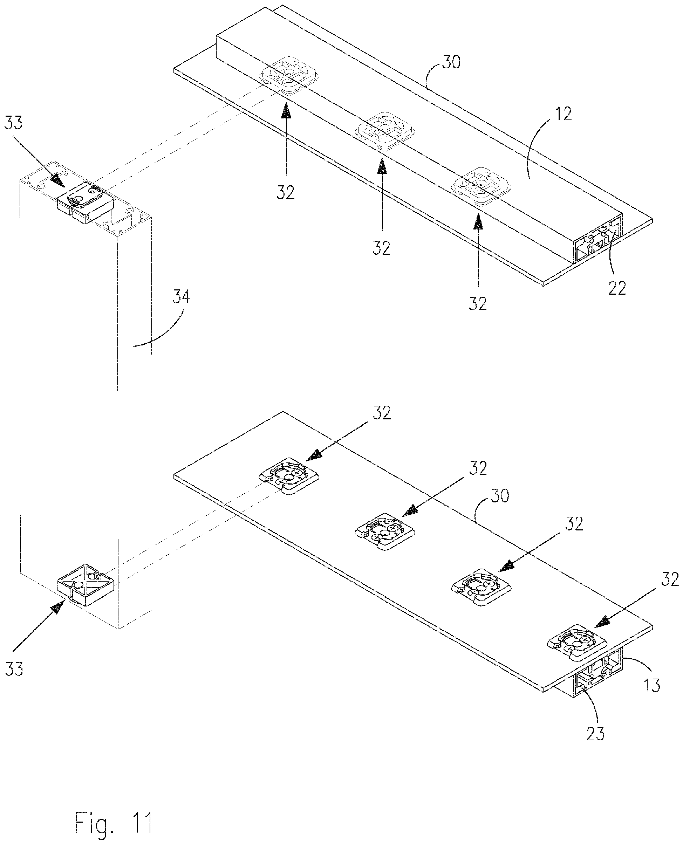

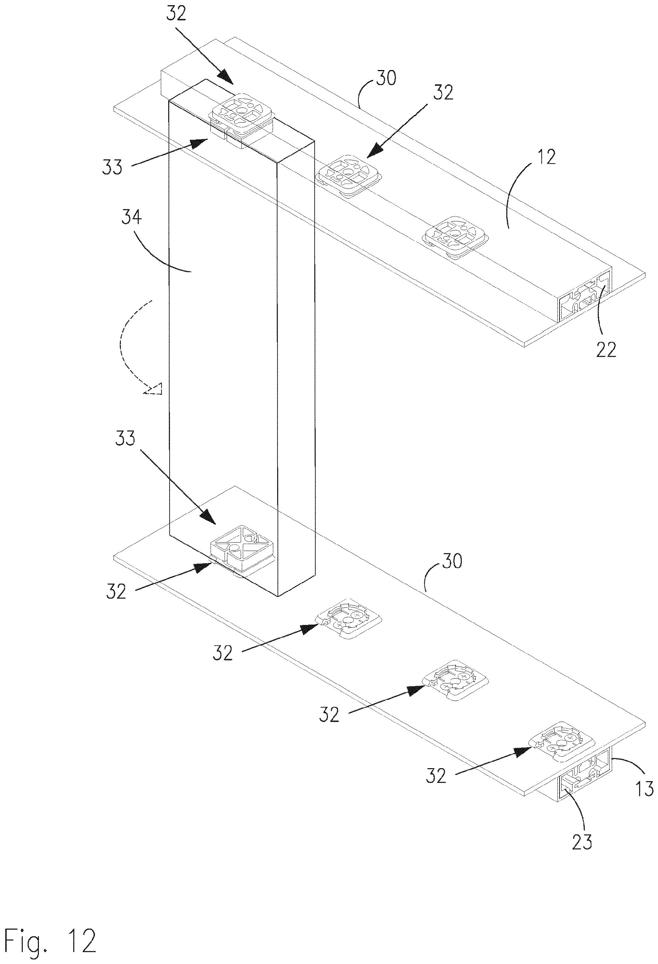

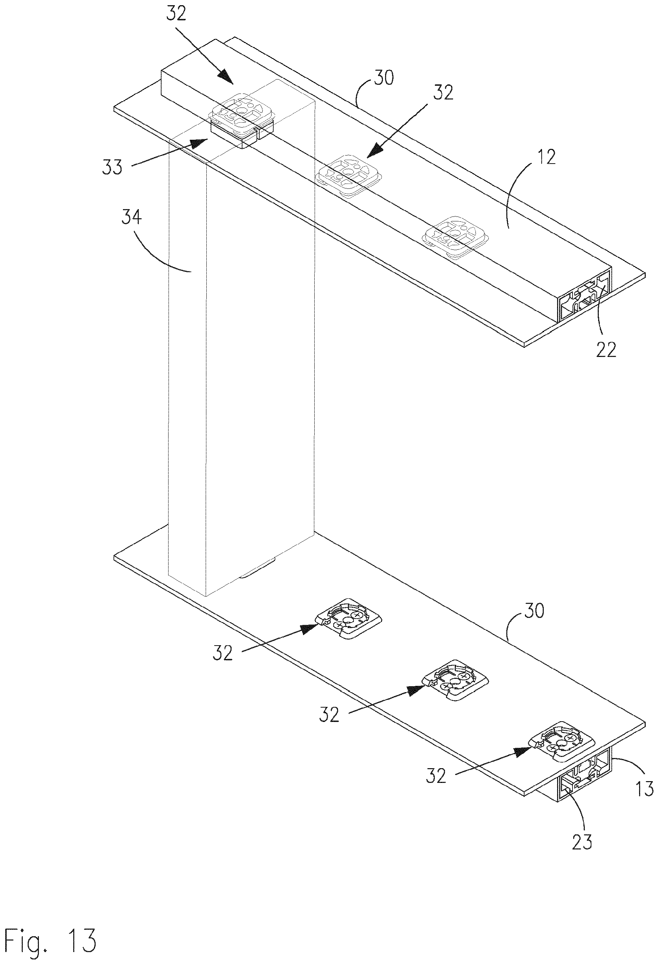

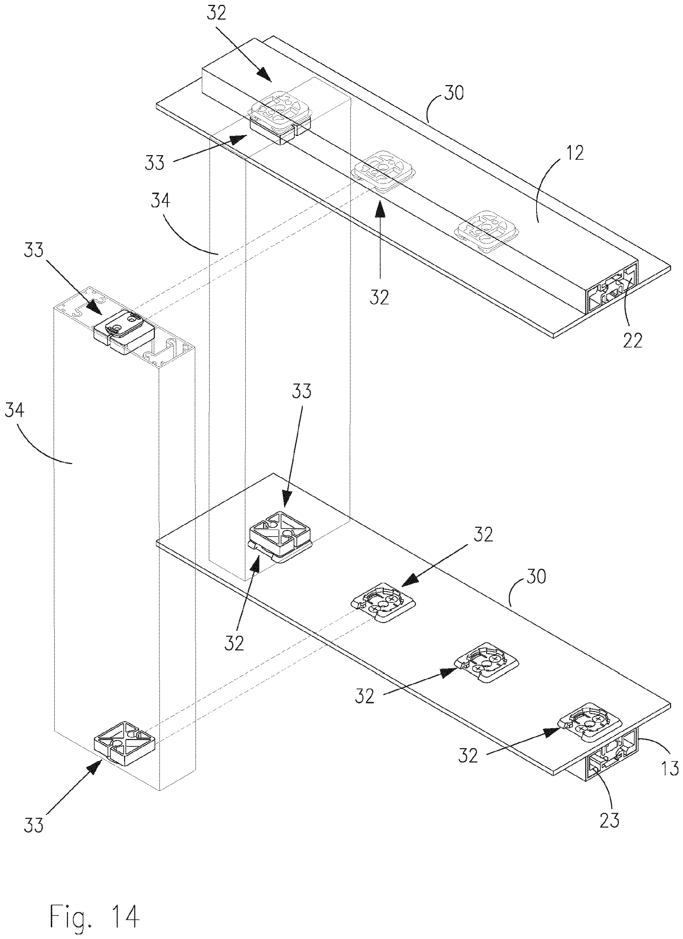

Figures 11 to 14 show how the positioning and fixing sequence of the series of partition panels or staves 34 takes place, that are to be positioned in the room for achieving the desired division of the room itself.

The second male coupling elements 33 fixed to the two ends of each dividing element or stave have an external shape which is inserted into a circular seat present in the first female coupling elements 32 previously fixed to the telescopic groups GTS, GTI according to the required positioning as shown in figure 4.

More specifically, for each dividing element 34, the T-shaped flat extension 40 of the plate structure 39 of the second male coupling element 33 is inserted, passing through the peripheral access opening 38 into the recessed circular housing 37 present in the plate structure 35 of the first female coupling element 32 integral with a telescopic group GTS, GTI.

Once this insertion has been completed, for both ends of the dividing element 34, a 90° rotation of the section of this dividing element or stave 34 is effected, fixing the same to the opposite telescopic groups GTS, GTI to the ceiling S and to the floor P. Once this coupling operation has been effected, a stable positioning of the dividing element 34 is obtained in the environment in the predetermined position. Said positioning that can be released, if necessary, by effecting the necessary rotation and uncoupling steps rapidly and almost immediately.

The blockage between the parts indicated above is achieved by means of a snap-engagement, for example by exploiting the elasticity of both the first female coupling element 32 and the second male coupling element 33 which can be made of a suitable plastic material. This material is also particularly favourable for effecting the positioning of said two coupling elements 32, 33 with respect to both ends of the single dividing element 34 and in the openings or recesses or seats present in the sections of the telescopic groups GTS, GTI.

The system according to the present invention is extremely simple to assemble and allows, as seen, the alignment and level adjustment of the telescopic groups GTS, GTI with the use of a simple Allen key. In this way, the system is adaptable even in the presence of ceilings or floors that are not perfectly level.

The positioning of the dividing elements or staves 34, which can have various forms, sizes and sections as desired, is effected in the environment in the pre-selected position thanks to the extreme ease of fixing the telescopic groups GTS, GTI.

The replacement of the dividing elements or staves 34, if necessary, for maintenance or for changing the form, is extremely easy and immediate thanks to the presence in the system of the coupling-uncoupling groups 32, 33.

The characteristics of the system object of the present invention are evident from the above description, as also the relative advantages.

From the embodiments described above, further variants are possible, without departing from the disclosure of the invention, which is defined by the appended claims.

Finally, it is evident that a system thus conceived can undergo numerous modifications and variations, all of which are within the scope of the appended claims; furthermore, all the details can be replaced by technically equivalent elements. In practice, the materials used, as also the dimensions, can vary according to the technical requirements.

## Claims

1. An installation system for partition panels for a room that includes a ceiling (S) and
a floor (P), wherein the system comprises in combination:
at least one upper telescopic group (GTS), produced with sections and suitable to be arranged constrained to the plane of the ceiling (S), and at least one lower telescopic group (GTI), produced with sections and suitable to be arranged constrained to the plane of the floor (P) respectively;
a series of partition panels (34) positioned between said upper and lower telescopic group (GTS, GTI) with the interpositioning of coupling-uncoupling groups (32,33);
wherein both said at least one upper telescopic group (GTS) and said lower telescopic group (GTI) comprise respectively a first section (12,13) and a second section (22,23) that are destined for being internally coupled with each other, wherein said second section (22, 23) is slidingly arranged internally with respect to the first section (12,13) and is adjustable in position with respect to the same, once said first section (12,13) has been fixed to the plane of the ceiling (S) and to the plane of the floor (P) respectively;
**characterized in that**
each of said coupling-uncoupling groups comprises a first female coupling element (32) and a second male coupling element (33) that are connected, one to said second section (22,23) and the other to said partition panel (34) and can be engaged with each other in rotation by means of releasable constraint means (37,38,40,42),
said first section (12,13) and a second section (22,23) are U-shaped in cross section and said
first section (12,13) in a central portion connecting the two sides of the U, within the section, has and carries a longitudinal shaped housing (15) with curved ends, slidingly receiving in its interior plates (16) carrying and axially constraining, free to rotate, externally threaded pins (17), which protrude perpendicular to each plate (16) and are inserted in threaded holes (21) produced in a solid central portion (24) of said second section (22,23),
wherein said first female coupling element (32) is fixed by means of fixing screws (27) within seats (26) of the second section (22, 23) forming part of the respective telescopic coupling group (GTS, GTI).

2. The system according to claim 1, **characterized in that** said first female coupling element (32) comprises a recessed circular housing (37), and said second male coupling element (33) comprises a plate structure (39) from which a flat elongated rectangular T-shaped extension protrudes for the engagement in said housing (37) by rotation.

3. The system according to claim 2, **characterized in that** in said first female coupling element (32) a plate structure (35) provides, in a base, said recessed circular housing (37), with a peripheral opening (38) for access to the housing (37) and provided with a perimetric edge (42) protruding inwardly, and in said second male coupling element (33), said flat T-shaped extension (40) is suitable for passing through the above-mentioned peripheral opening (38) for access to the housing (37) by its shorter side, so as to enter the same and, by said rotation, position itself blocked in its interior with its longer side beneath said perimetric edge (42).

4. The system according to claim 1, **characterized in that** said externally threaded pins (17) are provided with a blind hole (19) shaped for receiving an Allen key (20) which allows their rotation in screwing and/or unscrewing with respect to threaded holes (21) in said second section (22, 23).

5. The system according to one or more of the previous claims, **characterized in that** a covering plate (30) is further provided positioned above said second section (22,23) of said telescopic coupling groups (GTS,GTI) which provides a series of pass-through openings (31) which each allow the passage of a first female coupling element (32).

## Patentansprüche

1. Installationssystem für Trennwände für einen Raum, der eine Decke (S) und einen Boden (P) beinhaltet, wobei das System in Kombination umfasst:
mindestens eine obere Teleskopgruppe (GTS), die mit Abschnitten hergestellt und geeignet ist, festgespannt auf die Ebene der Decke (S) angeordnet zu werden, und mindestens eine untere Teleskopgruppe (GTI), die mit Abschnitten hergestellt und geeignet ist, jeweils festgespannt auf die Ebene des Bodens (P) angeordnet zu werden:
eine Reihe von Trennwänden (34), die zwischen der oberen und unteren Teleskopgruppe (GTS, GTI) unter Zwischenschaltung von Kopplungs-/Entkopplungsgruppen (32,33) positioniert sind; wobei sowohl die mindestens eine obere Teleskopgruppe (GTS) als auch die untere Teleskopgruppe (GTI) jeweils einen ersten Abschnitt (12, 13) und einen zweiten Abschnitt (22,23) umfassen, die dazu bestimmt sind, intern miteinander gekoppelt zu werden, wobei der zweite Abschnitt (22, 23) gleitend intern in Bezug auf den ersten Abschnitt (12, 13) angeordnet ist und in seiner Position in Bezug auf denselben einstellbar ist, sobald der erste Abschnitt (12, 13) an der Ebene der Decke (S) und an der Ebene des Bodens (P) befestigt worden ist;
**dadurch gekennzeichnet, dass**
jede der Kopplungs-Entkopplungsgruppen ein erstes weibliches Kopplungselement (32) und ein zweites männliches Kopplungselement (33) umfasst, die das eine mit dem zweiten Abschnitt (22,23) und das andere mit der Trennwand (34) verbunden sind und mittels lösbarer Zwangsmittel (37,38,40,42) drehend miteinander in Eingriff gebracht werden können,
der erste Abschnitt (12, 13) und ein zweiter Abschnitt (22,23) im Querschnitt U-förmig sind und der erste Abschnitt (12, 13) in einem mittleren Abschnitt, der die beiden Seiten des U verbindet, innerhalb des Abschnitts ein längliches geformtes Gehäuse (15) mit gekrümmten Enden aufweist und trägt, das in seinem Inneren Platten (16) gleitend aufnimmt, die drehbare mit Außengewinde versehene Stifte (17) tragen und axial festspannen, die senkrecht zu jeder Platte (16) vorstehen und in Gewindelöcher (21) eingesetzt sind, die in einem massiven mittleren Abschnitt (24) des zweiten Abschnitts (22,23) hergestellt sind,
wobei das erste weibliche Kopplungselement (32) mittels Befestigungsschrauben (27) in Aufnahmen (26) des zweiten Abschnitts (22, 23) befestigt ist, der einen Teil der jeweiligen Teleskopkopplungsgruppe (GTS, GTI) bilden.

2. System nach Anspruch 1, **dadurch gekennzeichnet, dass** die erste weibliche Kopplungs element (32) ein vertieftes kreisförmiges Gehäuse (37) umfasst, und das zweite männliche Kopplungselement (33) eine Plattenstruktur (39) umfasst, von der eine flache längliche rechteckige T-förmige Verlängerung für den Eingriff in das Gehäuse (37) durch Drehung vorsteht.

3. System nach Anspruch 2, **dadurch gekennzeichnet, dass** in dem ersten weiblichen Kopplungselement (32) eine Plattenstruktur (35) in einer Basis das vertiefte kreisförmige Gehäuse (37) mit einer Umfangsöffnung (38) für den Zugang zu dem Gehäuse (37) bereitstellt und mit einer nach innen vorstehenden Umfangskante (42) versehen ist, und in dem zweiten männlichen Kopplungselement (33) die flache T-förmige Verlängerung (40) geeignet ist, durch die oben genannte Umfangsöffnung (38) für den Zugang zu dem Gehäuse (37) durch ihre kürzere Seite hindurchzugehen, um in dieses einzutreten und sich selbst durch die Drehung in seinem Inneren mit ihrer längeren Seite unter der Umfangskante (42) blockiert zu positionieren.

4. System nach Anspruch 1, **dadurch gekennzeichnet, dass** die mit Außengewinde versehenen Stifte (17) mit einem Sackloch (19) versehen sind, das zur Aufnahme eines Inbusschlüssels (20) geformt ist, der ihre Drehung beim Ein- und/oder Ausschrauben in Bezug auf die Gewindelöcher (21) in dem zweiten Abschnitt (22, 23) ermöglicht.

5. System nach einem oder mehreren der vorhergehenden Ansprüche, **dadurch gekennzeichnet, dass** ferner eine Abdeckplatte (30) bereitgestellt ist, die über dem zweiten Abschnitt (22,23) der Teleskopkopplungsgruppen (GTS,GTI) positioniert ist, die eine Reihe von Durchgangsöffnungen (31) bereitstellt, die jeweils den Durchgang eines ersten weiblichen Kopplungselements (32) ermöglichen.

## Revendications

1. Système d'installation de panneaux de séparation pour une pièce qui inclut un plafond (S) et un plancher (P), dans lequel le système comprend en combinaison :
au moins un groupe télescopique supérieur (GTS), produit avec des sections et approprié pour être agencé en étant contraint au plan du plafond (S), et au moins un groupe télescopique inférieur (GTI), produit avec des sections et approprié pour être agencé en étant contraint au plan du plancher (P) respectivement ;
une série de panneaux de séparation (34) positionnés entre lesdits groupes télescopiques supérieur et inférieur (GTS, GTI) avec l'interposition de groupes de couplage-découplage (32, 33) ; dans lequel à la fois ledit au moins un groupe télescopique supérieur (GTS) et ledit groupe télescopique inférieur (GTI) comprennent respectivement une première section (12, 13) et une seconde section (22, 23) qui sont destinées à être couplées intérieurement l'une à l'autre, dans lequel ladite seconde section (22, 23) est agencée de manière coulissante intérieurement par rapport à la première section (12, 13) et est ajustable en position par rapport à celle-ci, une fois que ladite première section (12, 13) a été fixée au plan du plafond (S) et au plan du plancher (P) respectivement ;
**caractérisé en ce que**
chacun desdits groupes de couplage-découplage comprend un premier élément de couplage femelle (32) et un second élément de couplage mâle (33) qui sont reliés, l'un à ladite seconde section (22, 23) et l'autre audit panneau de séparation (34) et peuvent être mis en prise l'un avec l'autre en rotation au moyen de moyens de contrainte libérables (37, 38, 40, 42),
ladite première section (12, 13) et une seconde section (22, 23) sont en forme de U en section transversale et ladite première section (12, 13) dans une partie centrale reliant les deux côtés du U, au sein de la section, possède et porte une niche de forme longitudinale (15) ayant des extrémités incurvées, recevant de manière coulissante dans son intérieur des plaques (16) portant et contraignant de manière axiale des goupilles filetées extérieurement (17) libres en rotation, qui font saillie perpendiculairement à chaque plaque (16) et sont insérées dans des trous taraudés (21) produits dans une partie centrale pleine (24) de ladite seconde section (22, 23),
dans lequel ledit premier élément de couplage femelle (32) est fixé au moyen de vis de fixation (27) au sein de sièges (26) de la seconde section (22, 23) faisant partie du groupe de couplage télescopique (GTS, GTI) respectif.

2. Système selon la revendication 1, **caractérisé en ce que** le premier élément de couplage femelle (32) comprend une niche circulaire en retrait (37), et ledit second élément de couplage mâle (33) comprend une structure de plaque (39) à partir de laquelle une extension en forme de T rectangulaire allongée plate fait saillie pour la mise en prise dans ladite niche (37) par rotation.

3. Système selon la revendication 2, **caractérisé en ce que** dans ledit premier élément de couplage femelle (32), une structure de plaque (35), dans une base, munit ladite niche circulaire en retrait (37) d'une ouverture périphérique (38) pour un accès à la niche (37) et munie d'un bord périmétrique (42) faisant saillie vers l'intérieur, et dans ledit second élément de couplage mâle (33), ladite extension en forme de T plate (40) est appropriée pour traverser l'ouverture périphérique (38) susmentionnée pour un accès à la niche (37) par son côté le plus court, de façon à pénétrer dans celle-ci et, par ladite rotation, se positionner bloquée dans son intérieur avec son côté le plus long au-dessous dudit bord périmétrique (42).

4. Système selon la revendication 1, **caractérisé en ce que** lesdites goupilles filetées extérieurement (17) sont munies d'un trou borgne (19) façonné pour recevoir une clé Allen (20) qui permet leur rotation en vissage et/ou dévissage par rapport à des trous taraudés (21) dans ladite seconde section (22, 23).

5. Système selon l'une ou plusieurs des revendications précédentes, **caractérisé en ce qu'**une plaque de recouvrement (30) est en outre fournie en étant positionnée au-dessus de la seconde section (22, 23) desdits groupes de couplage télescopiques (GTS, GTI) qui fournit une série d'ouvertures traversantes (31) qui permettent chacune le passage d'un premier élément de couplage femelle (32).
